# EUROPÄISCHE PATENTSCHRIFT

(11) **EP 3 738 420 B1**
(45) Veröffentlichungstag und Bekanntmachung des Hinweises auf die Patenterteilung: **24.01.2024**
(21) Anmeldenummer: 20155863.2
(22) Anmeldetag: 06.02.2020
(51) Int. Cl.: A01B 69/00, A01B 69/04, A01D 41/127, G01S 17/42, G01S 17/88, G01S 17/89, G01S 17/931

(54) **VERFAHREN FÜR DEN BETRIEB EINER SELBSTFAHRENDEN LANDWIRTSCHAFTLICHEN ARBEITSMASCHINE**
METHOD FOR OPERATING A SELF-PROPELLED AGRICULTURAL WORKING MACHINE
PROCÉDÉ DE FONCTIONNEMENT D'UN ENGIN AGRICOLE AUTOMATIQUE

(30) Priorität: 14.05.2019 DE 102019112584
(43) Veröffentlichungstag der Anmeldung: 18.11.2020
(73) Patentinhaber: CLAAS Selbstfahrende Erntemaschinen GmbH, 33428 Harsewinkel (DE)
(72) Erfinder: Middelberg, René, 49080 Osnabrück (DE); Belau, Sven Carsten, 33330 Gütersloh (DE); Irmer, Daniel, 33442 Herzebock-Clarholz (DE); Spiekermann, Sebastian, 48346 Ostbevern (DE); Redenius, Jannik, 32361 Pr. Oldendorf (DE); Fischer, Frédéric, 59823 Arnsberg (DE); Skiba, Andreas, 33647 Bielefeld (DE)
(74) Vertreter: CLAAS Gruppe

(56) Entgegenhaltungen:
- EP-A1- 2 306 217
- EP-A1- 3 300 561
- DE-A1-102015 118 767
- DE-A1-102017 122 710

## Beschreibung

Die Erfindung betrifft ein Verfahren für den Betrieb einer selbstfahrenden landwirtschaftlichen Arbeitsmaschine gemäß dem Oberbegriff von Anspruch 1 sowie eine solche selbstfahrende landwirtschaftliche Arbeitsmaschine gemäß Anspruch 15.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen, wie Traktoren oder dergleichen.

Bei dem Betrieb einer in Rede stehenden, selbstfahrenden landwirtschaftlichen Arbeitsmaschine kommt der sensorbasierten Überwachung des Umfelds der Arbeitsmaschine zunehmende Bedeutung zu. Dadurch, dass das Umfeld der Arbeitsmaschine nicht in standardisierter, sensorisch leicht erfassbarer Form vorliegt, sondern vielmehr in gewissen Grenzen eine nicht deterministische Struktur aufweist, stellt die sensorbasierte Erfassung von vorbestimmten Eigenschaften des Umfelds der Arbeitsmaschine eine Herausforderung darf. Dies gilt insbesondere für das Vorfeld, also den vor der landwirtschaftlichen Arbeitsmaschine liegenden Bereich.

Das bekannte Verfahren (DE 10 2015 118 767 A1), von dem die Erfindung ausgeht, sieht eine Sensoranordnung vor, die ein laserbasiertes Sensorsystem aufweist. Dabei werden von dem laserbasierten Sensorsystem Eigenschaften des Vorfelds, auch als Vorfeldinformationen bezeichnet, erfasst. Die Vorfeldinformationen umfassen insbesondere die dreidimensionale Beschaffenheit des erfassten Vorfeldbereichs. Das laserbasierte Sensorsystem schließt dabei auf die dreidimensionale Beschaffenheit des Vorfeldbereichs aus Abstandsinformationen und Dichteinformationen, die dadurch erzeugt werden, dass das Sensorsystem den Vorfeldbereich mit in mehreren Scan-Ebenen verlaufenden elektromagnetischen Sendestrahlen (Messstrahlen) abtastet.

Ein Fahrerassistenzsystem der landwirtschaftlichen Arbeitsmaschine erzeugt dann basierend auf den Vorfeldinformationen Steueraktionen. Wird beispielsweise anhand der von dem Sensorsystem ermittelten dreidimensionalen Beschaffenheit des Vorfeldbereichs ein Hindernis detektiert, führt das Fahrerassistenzsystem beispielsweise als Steueraktionen einen Lenk- und/oder Bremsvorgang aus. Um solche Steueraktionen möglichst präzise und frühzeitig ausführen zu können, muss die dreidimensionale Beschaffenheit des Vorfeldbereichs möglichst exakt bestimmt werden. Neben der Verortung eines Hindernisses ist es beispielsweise auch wünschenswert, Informationen über dessen Ausrichtung im Raum und über dessen Höhe zu erlangen.

Ein weiteres Verfahren zum ortsaufgelösten Erfassen der Umgebung mittels eines Laserscanners bei einer landwirtschaftlichen Arbeitsmaschine ist aus der Druckschrift EP 2 306 217 A1 bekannt.

Der Erfindung liegt das Problem zugrunde, das bekannte Verfahren derart auszugestalten und weiterzubilden, dass für eine Hinderniserkennung relevante Vorfeldinformationen möglichst exakt bestimmt werden.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass grundsätzlich eine von einer Lichtquelle schräg auf einzelne Objekte oder eine Gruppe von Objekten projizierte gerade Linie aufgrund von Unebenheiten (Vorsprüngen, Vertiefungen etc.) in einer vertikalen oder horizontalen Projektion einen ungeraden Verlauf hat. Dieser Effekt wird auch bei dem vorschlagsgemäßen Verfahren ausgenutzt.

Bei dem vorschlagsgemäßen Verfahren wird eine solche, im Weiteren als Auftrefflinie bezeichnete, Linie von dem laserbasierten Sensorsystem, insbesondere einer Steuerungsanordnung des laserbasierten Sensorsystems, errechnet. Die Auftrefflinie wird also insbesondere nicht von einer horizontal oder vertikal ausgerichteten Kamera durch ein bildgebendes Verfahren abgelichtet (abfotografiert), sondern aus zuvor mittels des laserbasierten Sensorsystems erzeugten Abstandsinformationen errechnet. Dies geschieht für mehrere Scan-Ebenen, für die jeweils eine eigene Auftrefflinie errechnet wird. Die sich dann für den jeweiligen Zeitpunkt ergebende Anordnung der Auftrefflinien zueinander und/oder der Formgebung der einzelnen Auftrefflinien erlaubt dann Schlüsse auf die dreidimensionale Beschaffenheit des Vorfeldbereichs. Unter anderem lassen sich auf diese Weise rechtzeitig und mit hoher Genauigkeit Hindernisse ermitteln, die in Fahrtrichtung vor der Arbeitsmaschine verortet sind. Durch das vorschlagsgemäße Verfahren kann neben der Verortung vorzugsweise auch auf die Ausrichtung des jeweiligen Hindernisses im Raum und/oder auf dessen Höhe geschlossen werden.

Im Einzelnen wird nun vorgeschlagen, dass das laserbasierte Sensorsystem für die Scan-Ebenen aus den Abstandsinformationen jeweils eine Auftrefflinie errechnet und aus der Anordnung und/oder Formgebung der den Scan-Ebenen zugeordneten Auftrefflinien auf die dreidimensionale Beschaffenheit des Vorfeldbereichs schließt.

Besonders bevorzugt ist es dabei so, dass die Sendestrahlen (Messstrahlen), die das laserbasierte Sensorsystem aussendet, an Reflexionspunkten des Vorfeldbereichs reflektiert und wieder empfangen werden, wobei jedem Reflexionspunkt ein einen räumlichen Abstandswert repräsentierendes Reflexionssignal zugeordnet ist, wobei das laserbasierte Sensorsystem aufgrund einer Veränderung bzw. Verzerrung der Reflexionssignale aufeinanderfolgender Scan-Ebenen auf die dreidimensionale Beschaffenheit des Vorfeldbereichs schließt (Anspruch 2). Die Reflexionssignale repräsentieren insbesondere jeweils den Wert eines räumlichen Abstands zum zugeordneten Reflexionspunkt, wobei sich aus den Abstandswerten der jeweilige Abstand zwischen den Auftrefflinien ergibt. Eine Veränderung der Reflexionssignale über den Verlauf der Scan-Ebenen in deren Querrichtung repräsentiert dann eine Änderung des Abstands zwischen den Auftrefflinien nachfolgender Scan-Ebenen. Eine solche Abstandsänderung resultiert beispielsweise aus der Erfassung eines Hindernisses durch eine oder mehrere der Scan-Ebenen. Ein Hindernis führt in einem Abschnitt mindestens einer der Auftrefflinien zu einem lokalen Extremum, insbesondere lokalen Minimum, wodurch sich an dieser Stelle der Abstand zwischen dieser und einer dazu benachbarten Auftrefflinie ändert, insbesondere verringert.

Grundsätzlich kann neben Hindernissen auf diese Weise, wie im Weiteren noch erläutert wird, auch ein abgeernteter Bestand, ein stehender Bestand, eine Straße und/oder der Übergang vom Vorgewende in den stehenden Bestand ermittelt werden.

Nach der bevorzugten Ausgestaltung gemäß Anspruch 3 liegen die räumlichen Abstandswerte für alle Scan-Ebenen in einem Koordinatensystem entlang der jeweiligen Auftrefflinie. In dem Koordinatensystem sind die räumlichen Abstandswerte der Scan-Ebenen dabei über eine Richtung quer zur Fahrtrichtung aufgetragen.

Anspruch 4 definiert, dass eine Vielzahl von in Querrichtung der jeweiligen Scan-Ebene nebeneinander liegenden Reflexionspunkten erfasst wird, und zwar für jede der Scan-Ebenen, und für jeden Reflexionspunkt ein Reflexionssignal erzeugt wird, das einen räumlichen Abstandswert repräsentiert.

In Anspruch 5 sind bevorzugte Anzahlen von Scan-Ebenen angegeben.

Nach den bevorzugten Ausgestaltungen gemäß den Ansprüchen 6 und 7 kann durch das vorschlagsgemäße Verfahren, wie bereits zuvor angedeutet, abgeernteter Bestand, stehender Bestand, ein Hindernis, eine Straße und/oder der Übergang vom Vorgewende in den stehenden Bestand erkannt werden. Dies erfolgt insbesondere basierend auf den Änderungen der Abstände zwischen den Auftrefflinien entlang ihres Verlaufs, da sich die Abstände zwischen den Auftrefflinien je nach erfasstem Objekt unterscheiden. Beispielsweise ist der Abstand zwischen den Auftrefflinien aufeinanderfolgender Scan-Ebenen bei der Erfassung von abgeerntetem Bestand größer als bei der Erfassung von stehendem Bestand und auch größer als bei der Erfassung eines Hindernisses. Werden nun die verschiedenen Abstände miteinander verglichen, kann auf die einzelnen Objekte (abgeernteter Bestand, stehender Bestand, Hindernis, Stra-βe etc.) geschlossen werden. Insbesondere kann auf ein Hindernis, das vertikal aus dem Bestand ragt, auch durch die zeitliche Veränderung des Abstands zwischen zwei Auftrefflinien geschlossen werden, da sich der Abstand zwischen den Auftrefflinien mit abnehmender Entfernung der Arbeitsmaschine von dem Hindernis zunehmend und insbesondere stärker als bei anderen Objekten verringert (Anspruch 8).

Auch der Grad der Streuung der räumlichen Abstandswerte kann herangezogen werden, um die besagten Objekte voneinander zu unterscheiden. So ist beispielsweise der Grad der Streuung der räumlichen Abstandswerte bei der Erfassung von abgeerntetem Bestand von oben kleiner als bei der Erfassung von stehendem Bestand von oben, aber üblicherweise größer als bei der seitlichen Erfassung eines Hindernisses (Anspruch 9). Auch hier kann durch Vergleich der unterschiedlichen Streuungsgrade auf die jeweiligen Objekte geschlossen werden.

Nach den bevorzugten Ausgestaltungen gemäß den Ansprüchen 10 und 11 lässt sich aus dem Abstand zwischen den Auftrefflinien aufeinanderfolgender Scan-Ebenen auch auf die Ausrichtung eines Hindernisses schließen und/oder erkennen, ob ein Objekt von oben oder seitlich erfasst worden ist.

Anspruch 12 definiert die Möglichkeit, mittels des laserbasierten Sensorsystems auch die Höhe einzelner Objekte zu ermitteln.

Die zuvor aufgeführten Parameter wie die Abstandsänderungen zwischen den Auftrefflinien, der jeweilige Grad der Streuung und/oder die Höhe, können gemäß Anspruch 13 jeweils für die Ermittlung der dreidimensionalen Beschaffenheit des Vorfeldbereichs herangezogen werden.

Nach der weiter bevorzugten Ausgestaltung gemäß Anspruch 14 können, wenn auf die beschriebene Weise ein Hindernis erkannt worden ist, Steueraktionen durch das Fahrerassistenzsystem erzeugt werden. Beispielsweise kann als Steueraktion ein Lenk- und/oder Bremsvorgang der Arbeitsmaschine bewirkt werden.

Nach einer weiteren Lehre gemäß Anspruch 15, der eigenständige Bedeutung zukommt, wird eine selbstfahrende landwirtschaftliche Arbeitsmaschine, insbesondere Erntemaschine, als solche zur Durchführung eines vorschlagsgemäßen Verfahrens beansprucht. Auf alle Ausführungen, die geeignet sind, die Arbeitsmaschine als solche zu beschreiben, darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße selbstfahrende landwirtschaftliche Arbeitsmaschine in einer Seitenansicht a) im abgeernteten Bestand, b) im stehenden Bestand, c) auf ebenem Untergrund vor einem Hindernis und d) vor dem Übergang vom Vorgewende in den stehenden Bestand,
- Fig. 2: eine schematische Darstellung des vorschlagsgemäßen Verfahrens mit einer Darstellung a) der landwirtschaftlichen Arbeitsmaschine in einer Seitenansicht, b) errechneter Auftrefflinien in einem Koordinatensystem und c) der landwirtschaftlichen Arbeitsmaschine in einer Draufsicht mit im Vorfeldbereich dargestellten Reflexionspunkten und
- Fig. 3: die landwirtschaftliche Arbeitsmaschine bei einem Ernteprozess in einem stehenden Bestand mit einem Hindernis a) in einer Draufsicht und b) in einer Seitenansicht.

Die vorschlagsgemäße Lösung lässt sich auf einen weiten Bereich selbstfahrender landwirtschaftlicher Arbeitsmaschinen anwenden. Dazu gehören Erntemaschinen wie Mähdrescher, Feldhäcksler oder dergleichen sowie Zugmaschinen, insbesondere Traktoren. Bei den dargestellten und insoweit bevorzugten Ausführungsbeispielen handelt es sich bei der landwirtschaftlichen Arbeitsmaschine 1 jeweils um einen Mähdrescher, der sich in einem Ernteprozess befindet.

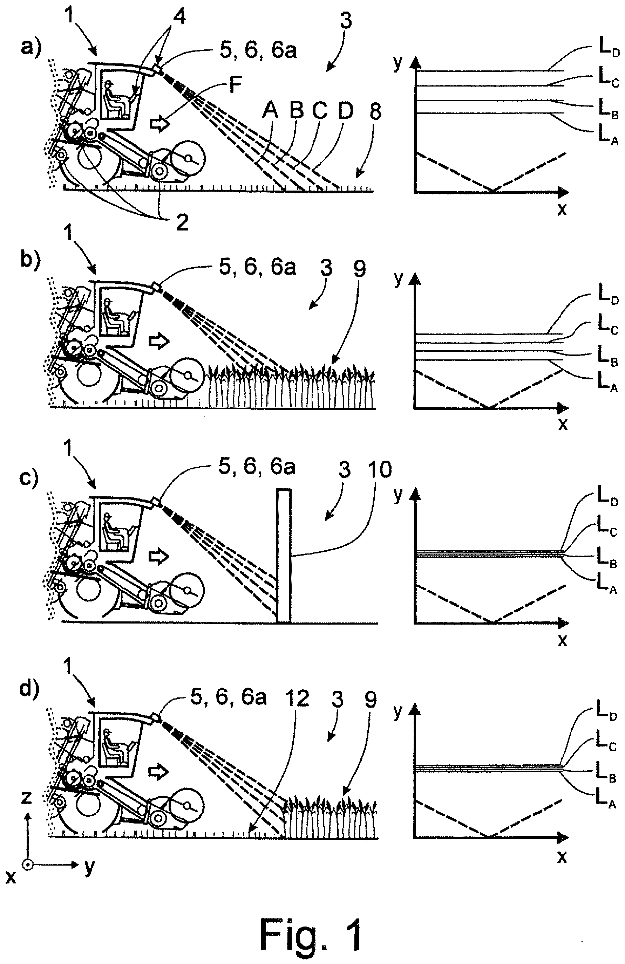

Die vorschlagsgemäße landwirtschaftliche Arbeitsmaschine 1 ist, wie Fig. 1a) zeigt, mit mindestens einem Arbeitsorgan 2 ausgestattet. Als Arbeitsorgane 2 kann der Mähdrescher in üblicher Weise ein Vorsatzgerät mit einem Schneidwerk, einen Fahrantrieb, ein Dreschwerk, eine Abscheidevorrichtung, eine Reinigungsvorrichtung und/oder eine Verteilvorrichtung aufweisen. Die Arbeitsorgane 2 dienen jeweils zur Durchführung oder Unterstützung landwirtschaftlicher Arbeit in einem Feld 3.

Ferner ist die landwirtschaftliche Arbeitsmaschine 1 mit einem Fahrerassistenzsystem 4 zum Erzeugen von Steueraktionen innerhalb der Arbeitsmaschine 1 ausgestattet. Die Steueraktionen können einerseits die Ansteuerung und Parametrierung der Arbeitsorgane 2 betreffen und beispielsweise Lenk- und/oder Bremsvorgänge der landwirtschaftlichen Arbeitsmaschine 1 und/oder Höhen- oder Querverstellungen von Arbeitsorganen der landwirtschaftlichen Arbeitsmaschine 1 umfassen und andererseits die Anzeige von Informationen für den Benutzer betreffen.

Weiter weist das Fahrerassistenzsystem 4 eine Sensoranordnung 5 zur Erzeugung von Vorfeldinformationen auf, wobei das Fahrerassistenzsystem 4 die Steueraktionen basierend auf den Vorfeldinformationen erzeugt. Die Sensoranordnung 5 weist ein laserbasiertes Sensorsystem 6, beispielsweise ein auf einem LIDAR-Sensor basierendes Sensorsystem 6, und gegebenenfalls ein optionales kamerabasiertes Sensorsystem auf, die beide jeweils an der Arbeitsmaschine 1, vorzugsweise in einer gegenüber der Feldebene erhöhten Position, angeordnet sind. Hinsichtlich der konstruktiven Realisierung und der Funktionsweise des in Rede stehenden laserbasierten Sensorsystems 6 darf auf die DE 10 2015 118 767 A1 verwiesen werden, die auf die Anmelderin zurückgeht.

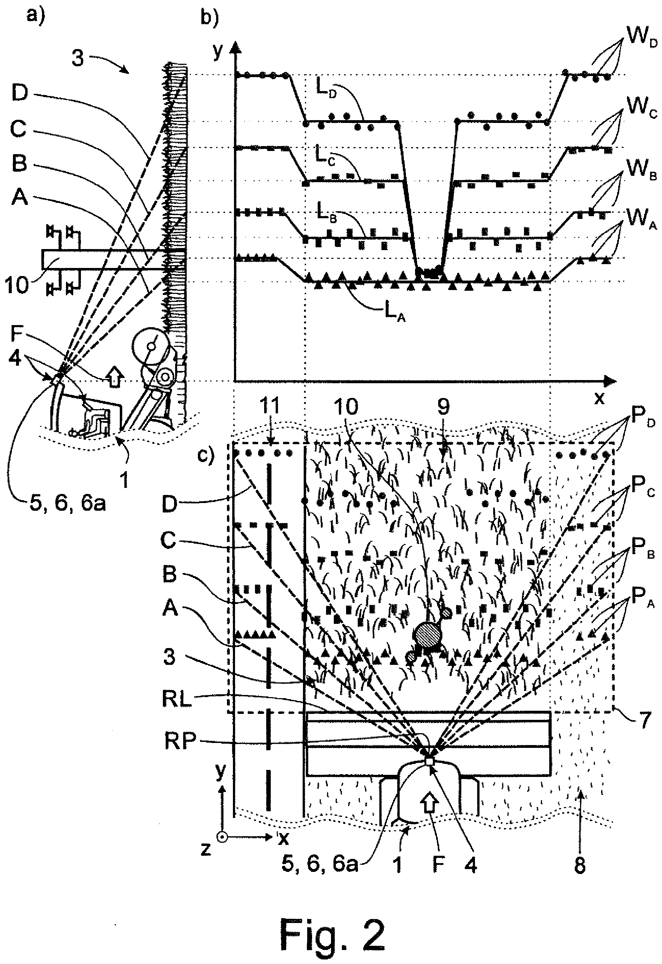

Das laserbasierte Sensorsystem 6, gegebenenfalls auch das optionale kamerabasierte Sensorsystem, erzeugt jeweils zumindest Sensorinformationen in Form von Abstandsinformationen zu einem vorbestimmten, relevanten Vorfeldbereich 7 der Arbeitsmaschine 1. Vorzugsweise erzeugt die Sensoranordnung 5 basierend auf den Abstandsinformationen und gegebenenfalls weiteren Sensorinformationen jedenfalls des laserbasierten Sensorsystems 6 die Vorfeldinformationen. Alternativ bilden die Abstandsinformationen und gegebenenfalls weiteren Sensorinformationen jedenfalls des laserbasierten Sensorsystems 6 zumindest einen Teil der Vorfeldinformationen. In den dargestellten und insoweit bevorzugten Ausführungsbeispielen ist der relevante Vorfeldbereich 7 als ein Bereich vorbestimmter Form und Größe definiert, der in Fahrtrichtung F vor der Arbeitsmaschine 1 liegt. In Fig. 2c) ist der Vorfeldbereich 7 als ein rechteckiger Bereich vor der Arbeitsmaschine 1 dargestellt.

Das laserbasierte Sensorsystem 6 tastet zur Erzeugung von Abstandsinformationen zu dem Vorfeldbereich 7 den Vorfeldbereich 7 mit in mehreren Scan-Ebenen A, B, C, D verlaufenden elektromagnetischen Sendestrahlen ab. Die Scan-Ebenen A, B, C, D erstrecken sich von einem gemeinsamen Punkt, von dem die Sendestrahlen ausgesendet werden, in Richtung des Vorfeldbereichs 7 und treffen in einem flachen Winkel von vorzugsweise weniger als 45° von oben auf die Feldebene oder die horizontale Hüllfläche des Bestands. Die Scan-Ebenen A, B, C, D verlaufen jeweils winkelig zueinander, sind also zueinander aufgespreizt, sodass sich der Abstand zwischen den Scan-Ebenen A, B, C, D mit zunehmender Entfernung von dem gemeinsamen Punkt, von dem die Sendestrahlen ausgesendet werden, vergrößert.

Vorzugsweise ist eine Anzahl von mindestens drei oder genau drei Scan-Ebenen A, B, C, D vorgesehen. Besonders bevorzugt ist eine Anzahl von mindestens vier, hier und vorzugsweise genau vier, Scan-Ebenen A, B, C, D vorgesehen.

Wesentlich ist nun, dass das laserbasierte Sensorsystem 6, insbesondere eine Steuerungsanordnung 6a des laserbasierten Sensorsystems 6, für die Scan-Ebenen A, B, C, D aus den Abstandsinformationen jeweils eine Auftrefflinie L_{A}, L_{B}, Lc, L_{D} errechnet und aus der Anordnung und/oder Formgebung der den Scan-Ebenen A, B, C, D zugeordneten Auftrefflinien L_{A}, L_{B}, Lc, L_{D} auf die dreidimensionale Beschaffenheit des Vorfeldbereichs 7 schließt.

Die Sendestrahlen, die von dem laserbasierten Sensorsystem 6 ausgesendet werden, werden an Reflexionspunkten P_{A}, P_{B}, P_{C}, P_{D} des Vorfeldbereichs 7 reflektiert und von dem Sensorsystem 6 wieder empfangen. Unter einem Reflexionspunkt wird eine Stelle an Objekten wie Halmen, Ähren, Stoppeln, Hindernissen etc. im Vorfeldbereich 7 verstanden, an denen der jeweilige Sendestrahl reflektiert wird. Wie Fig. 2 c) zeigt, liegen je Scan-Ebene A, B, C, D mehrere Reflexionspunkte P_{A}, P_{B}, P_{C}, P_{D} in Querrichtung der jeweiligen Scan-Ebene A, B, C, D nebeneinander. Die Querrichtung der jeweiligen Scan-Ebene A, B, C, D ist dabei die Richtung der Scan-Ebene A, B, C, D quer zur Fahrtrichtung F der landwirtschaftlichen Arbeitsmaschine 1. Das laserbasierte Sensorsystem 6 tastet den Vorfeldbereich 7 hier und vorzugsweise dadurch ab, dass es periodisch Sendepulse aus Sendestrahlen in mindestens einer Senderichtung auf den Vorfeldbereich 7 aussendet, wobei die Sendepulse an besagten Reflexionspunkten P_{A}, P_{B}, P_{C}, P_{D} des Vorfeldbereichs 7 reflektiert und als Echopulse von dem laserbasierten Sensorsystem 6 empfangen werden.

Jedem Reflexionspunkt P_{A}, P_{B}, P_{C}, P_{D} ist ein einen räumlichen Abstandswert W_{A}, W_{B}, Wc, W_{D} repräsentierendes Reflexionssignal zugeordnet. Ein räumlicher Abstandswert W_{A}, W_{B}, Wc, W_{D} ist ein Wert für den Abstand zwischen Arbeitsmaschine 1 und jeweiligem Reflexionspunkt P_{A}, P_{B}, P_{C}, P_{D}. Gemäß den Figuren 2b) und c) ist beispielsweise den Reflexionspunkten P_{A} jeweils ein Abstandswert W_{A}, den Reflexionspunkten P_{B} jeweils ein Abstandswert W_{B}, den Reflexionspunkten Pc jeweils ein Abstandswert Wc und den Reflexionspunkten P_{D} jeweils ein Abstandswert W_{D} zugeordnet. Der Abstand ist dabei insbesondere der Abstand von einer quer, insbesondere orthogonal, zur Fahrtrichtung F verlaufenden Referenzlinie RL, insbesondere einer Kante der Arbeitsmaschine 1, hier beispielsweise einer Vorderkante des Vorsatzgeräts, zu dem jeweiligen Reflexionspunkt P_{A}, P_{B}, P_{C}, P_{D}. Vorzugsweise ist der Abstand von der Referenzlinie RL zu dem jeweiligen Reflexionspunkt P_{A}, P_{B}, P_{C}, P_{D} ein horizontaler Abstand in Fahrtrichtung F. Der Abstand kann auch der Abstand von einem Referenzpunkt RP, insbesondere einem zentralen Punkt an der Arbeitsmaschine, hier beispielsweise dem Punkt des laserbasierten Sensorsystems 6, von dem der jeweilige Sendestrahl ausgesendet wird, zu dem jeweiligen Reflexionspunkt P_{A}, P_{B}, P_{C}, P_{D} sein. In letzterem Fall ist der Abstand nicht horizontal gemessen, sondern in einer Richtung winkelig zur Horizontalen und Vertikalen. Insbesondere kann aus dem Wert des letzteren Abstands von dem Referenzpunkt RP zu dem jeweiligen Reflexionspunkt P_{A}, P_{B}, P_{C}, P_{D} als räumlicher Abstandswert W_{A}, W_{B}, Wc, W_{D} über eine Berechnungsvorschrift, die insbesondere eine Winkelkorrektur umfasst, der Wert des horizontalen Abstands in Fahrtrichtung F von der Referenzlinie RL zu dem jeweiligen Reflexionspunkt P_{A}, P_{B}, P_{C}, P_{D} ermittelt werden.

Unter dem Reflexionssignal wird hier ein Signal bzw. eine Information verstanden, das bzw. die als Ergebnis der Abtastung einen Parameterwert mindestens eines Parameters umfasst, aus dem sich der Wert für den räumlichen Abstand zu einem Reflexionspunkt P_{A}, P_{B}, P_{C}, P_{D} ermitteln lässt. Ein solcher Parameter ist, um lediglich einige Beispiele zu nennen, insbesondere die Puls-Laufzeit von der Aussendung des Sendepulses bis zum Empfang des Echopulses, die Phasenverschiebung zwischen dem ausgesendeten Sendepuls und dem empfangenen Echopuls oder die Differenz der Signalstärke des empfangenen Echopulses zu der des ausgesendeten Sendepulses. Ein Reflexionssignal kann auch ein Signal bzw. eine Information sein, das bzw. die den Wert für den räumlichen Abstand zu dem jeweiligen Reflexionspunkt P_{A}, P_{B}, P_{C}, P_{D} unmittelbar beinhaltet.

Weiter ist es hier und vorzugsweise so, dass das laserbasierte Sensorsystem 6, insbesondere die Steuerungsanordnung 6a, aufgrund einer Veränderung bzw. Verzerrung der Reflexionssignale aufeinanderfolgender Scan-Ebenen A, B, C, D, die insbesondere eine Abstandsänderung zwischen den Auftrefflinien L_{A}, L_{B}, Lc, L_{D} aufeinanderfolgender Scan-Ebenen A, B, C, D repräsentiert, auf die dreidimensionale Beschaffenheit des Vorfeldbereichs 7 schließt. Das laserbasierte Sensorsystem 6 schließt also insbesondere aufgrund einer Abstandsänderung zwischen den Auftrefflinien L_{A}, L_{B}, Lc, L_{D} auf die dreidimensionale Beschaffenheit des Vorfeldbereichs 7.

Bei der in Rede stehenden Auftrefflinie L_{A}, L_{B}, Lc, L_{D} handelt es sich jeweils um eine errechnete Linie, die in Querrichtung der jeweiligen Scan-Ebene A, B, C, D den Verlauf einer Folge von Werten der räumlichen Abstandswerte W_{A}, W_{B}, Wc, W_{D} von Reflexionspunkten P_{A}, P_{B}, P_{C}, P_{D} repräsentiert.

Die Abstandsänderungen zwischen den Auftrefflinien L_{A}, L_{B}, Lc, L_{D}, die über den Verlauf der Auftrefflinien L_{A}, L_{B}, Lc, L_{D} vorliegen können, ergeben sich dabei wie folgt. Wenn die Scan-Ebenen A, B, C, D in unterschiedlichen Entfernungen von der Arbeitsmaschine 1 auf den Vorfeldbereich 7 treffen, haben die Auftrefflinien L_{A}, L_{B}, Lc, L_{D} aufeinanderfolgender Scan-Ebenen A, B, C, D einen Abstand zueinander, wobei sich dieser Abstand über ihren Verlauf bzw. den Verlauf in Querrichtung der jeweiligen Scan-Ebene A, B, C, D verändern kann. Eine Änderung des Abstands ergibt sich beispielsweise durch vorspringende Abschnitte oder vertiefte Abschnitte im gesamten Vorfeldbereich 7. Eine Änderung des Abstands zwischen den Auftrefflinien L_{A}, L_{B}, Lc, L_{D} deutet dann auf eine Abweichung der dreidimensionalen Beschaffenheit des Vorfeldbereichs 7 hin.

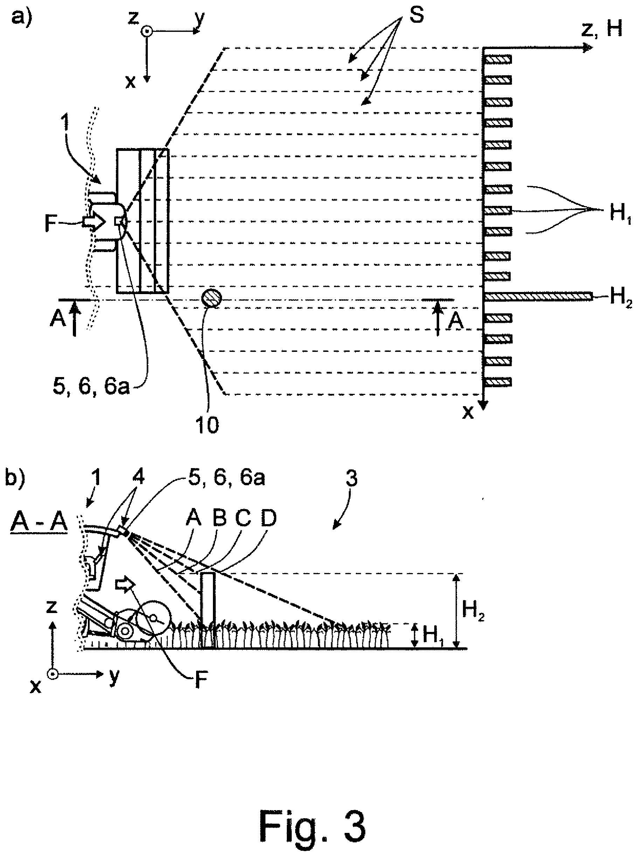

Fig. 2b) zeigt beispielhaft ein Koordinatensystem, in dem die räumlichen Abstandswerte W_{A}, W_{B}, Wc, W_{D} (y-Achse) je Scan-Ebene A, B, C, D über eine Richtung quer zur Fahrtrichtung F (x-Achse) aufgetragen sind. In dem Koordinatensystem liegen die räumlichen Abstandswerte W_{A}, W_{B}, Wc, W_{D} aller Scan-Ebenen A, B, C, D entlang der jeweiligen Auftrefflinie L_{A}, L_{B}, Lc, L_{D}. Die Auftrefflinie L_{A}, L_{B}, Lc, L_{D} ist hierbei eine errechnete Linie, die in einem Koordinatensystem, hier einem kartesischen Koordinatensystem, dem Verlauf der Abstandswerte W_{A}, W_{B}, Wc, W_{D} der jeweiligen Scan-Ebene A, B, C, D folgt. Die Auftrefflinie L_{A}, L_{B}, Lc, L_{D} ist insbesondere eine Abstandswert-Durchschnittslinie. So können die räumlichen Abstandswerte sektorweise gemittelt werden, so dass sich je Sektor S ein Durchschnittswert für die Abstandswerte in diesem Sektor ergibt. Die Abstandswert-Durchschnittslinie verbindet diese Durchschnittswerte. Ein Sektor S ist beispielsweise, wie Fig. 3a) zeigt, ein Abschnitt in Verlaufsrichtung der x-Achse des Koordinatensystems und/oder ein Abschnitt entlang der Quererstreckung der jeweiligen Scan-Ebene A, B, C, D.

Wie nun eine Zusammenschau der Figuren 1 und 2 zeigt, ist das laserbasierte Sensorsystem 6 hier und vorzugsweise so ausgestaltet, dass es im Vorfeldbereich abgeernteten Bestand 8 (Stoppeln), stehenden Bestand 9, gegenüber abgeerntetem und/oder stehendem Bestand 8, 9 vertikal hervorstehende Hindernisse 10 wie Strommasten, Zaunpfähle oder dergleichen, Straßen 11 und/oder den Übergang vom Vorgewende 12 in stehenden Bestand 9 erkennt.

Dazu ist, wie die Figuren 1a) bis d) sowie 2c) zeigen, hier und vorzugsweise vorgesehen, dass der Abstand zwischen den Auftrefflinien L_{A}, L_{B}, Lc, L_{D} aufeinanderfolgender Scan-Ebenen A, B, C, D
- bei der Erfassung von abgeerntetem Bestand 8 von oben größer als bei der Erfassung von stehendem Bestand 9 von oben ist, und/oder,
- bei der Erfassung einer Straße 11 von oben größer als bei der Erfassung von stehendem Bestand 9 von oben ist, und/oder,
- bei der Erfassung von stehendem Bestand 9 von oben größer als bei der seitlichen Erfassung von einem gegenüber dem stehenden Bestand 9 vertikal hervorstehenden Hindernis 10 ist, und/oder,
- bei der Erfassung von abgeerntetem Bestand 8 von oben größer als bei der seitlichen Erfassung von einem gegenüber dem abgeernteten Bestand 8 vertikal hervorstehenden Hindernis 10 ist, und/oder,
- bei der Erfassung von abgeerntetem Bestand 8 von oben im Wesentlichen gleich groß wie bei der Erfassung einer Straße 11 von oben ist, und/oder,
- bei der Erfassung von stehendem Bestand 9 von oben größer als bei der seitlichen Erfassung von stehendem Bestand 9, beispielsweise im Übergang vom Vorgewende 12 in den stehenden Bestand 9, ist, und/oder,
- bei der Erfassung von abgeerntetem Bestand 8 von oben größer als bei der seitlichen Erfassung von stehendem Bestand 9, beispielsweise im Übergang vom Vorgewende 12 in den stehenden Bestand 9, ist.

Die unterschiedlichen Abstände zwischen den Auftrefflinien L_{A}, L_{B}, Lc, L_{D} aufeinanderfolgender Scan-Ebenen A, B, C, D ergeben sich dadurch, dass die Scan-Ebenen A, B, C, D vorzugsweise so ausgerichtet sind, dass sie in einem relativ flachen Winkel auf die Feldebene oder die horizontale Hüllfläche stehenden Bestands 9 treffen. Deshalb spreizen sich bei abgeerntetem Bestand 8 oder auch bei einer Straße 11 die Scan-Ebenen A, B, C, D relativ weit auf (Fig. 1a) und 2c)). Auch bei stehendem Bestand 9 spreizen sich die Scan-Ebenen A, B, C, D relativ weit auf, allerdings weniger weit als bei abgeerntetem Bestand 8, da bei stehendem Bestand 9 die Entfernung von dem Punkt, von dem die Sendestrahlen ausgesendet werden, zur abgetasteten Hüllfläche kürzer als zur Feldebene ist (Fig. 1b) und 2c)). Noch weniger weit spreizen sich die Scan-Ebenen A, B, C, D auf, wenn sie seitlich auf ein vertikales Objekt treffen, beispielsweise ein Hindernis 10 (Fig. 1c) und 2c)) oder die seitlich Hüllfläche von stehendem Bestand 9 im Bereich des Übergangs vom Vorgewende 12 in den stehenden Bestand 9 (Fig. 1d)).

Weiter kann vorgesehen sein, dass sich der Abstand zwischen den Auftrefflinien L_{A}, L_{B}, Lc, L_{D} aufeinanderfolgender Scan-Ebenen A, B, C, D mit abnehmender Entfernung der Arbeitsmaschine 1 von einem gegenüber abgeerntetem und/oder stehendem Bestand 8, 9 vertikal hervorstehenden Hindernis10 bei der seitlichen Erfassung des Hindernisses 10 zunehmend verringert.

Wie die Figuren 2b) und c) zeigen, erfasst das laserbasierte Sensorsystem 6 bei der Abtastung des Vorfeldbereichs 7 je Scan-Ebene A, B, C, D eine Vielzahl von in Querrichtung der jeweiligen Scan-Ebene A, B, C, D nebeneinander liegenden Reflexionspunkten P_{A}, P_{B}, P_{C}, P_{D}. Da die Scan-Ebenen A, B, C, D aber gegenüber der Horizontalen geneigt sind, liegen die Reflexionspunkte P_{A}, P_{B}, Pc, P_{D} in einer vertikalen Projektion nicht zwingend exakt nebeneinander, sondern können auch Streuen. Der Grad der Streuung hängt dabei von dem abgetasteten Objekt ab, wie noch erläutert wird.

Nun kann weiter vorgesehen sein, dass der Grad der Streuung der räumlichen Abstandswerte W_{A}, W_{B}, Wc, W_{D}, insbesondere der Grad der Streuung der räumlichen Abstandswerte W_{A}, W_{B}, Wc, W_{D} um die jeweilige Auftrefflinie L_{A}, L_{B}, Lc, L_{D}, insbesondere Abstandswert-Durchschnittslinie,
- bei der Erfassung von abgeerntetem Bestand 8 von oben kleiner als bei der Erfassung von stehendem Bestand 9 von oben ist, und/oder,
- bei der Erfassung einer Straße 11 von oben kleiner als bei der Erfassung von stehendem Bestand 9 von oben ist, und/oder,
- bei der Erfassung von stehendem Bestand 9 von oben größer als bei der seitlichen Erfassung von einem gegenüber dem stehenden Bestand 9 vertikal hervorstehenden Hindernis 10 ist, und/oder,
- bei der Erfassung von abgeerntetem Bestand 8 von oben größer als bei der seitlichen Erfassung von einem gegenüber dem abgeernteten Bestand 8 vertikal hervorstehenden Hindernis 10 ist, und/oder,
- bei der Erfassung von abgeerntetem Bestand 8 von oben größer als bei der Erfassung einer Straße 11 von oben ist, und/oder,
- bei der Erfassung von stehendem Bestand 9 von oben im Wesentlichen gleich groß wie bei der seitlichen Erfassung von stehendem Bestand 9, beispielsweise im Übergang vom Vorgewende 12 in den stehenden Bestand 9, ist, und/oder,
- bei der Erfassung von abgeerntetem Bestand 8 von oben kleiner als bei der seitlichen Erfassung von stehendem Bestand 9, beispielsweise im Übergang vom Vorgewende 12 in den stehenden Bestand 9, ist.

Die unterschiedlichen Streuungsgrade ergeben sich, wie Fig. 2c) erkennen lässt, dadurch, dass die abgetastete Oberfläche bei einem abgeernteten Bestand 8 relativ dicht und gleichmäßig ist, sodass relativ viele Reflexionspunkte P_{A}, P_{B}, P_{C}, P_{D} in derselben Ebene liegen, wodurch auch die entsprechenden Abstandswerte W_{A}, W_{B}, Wc, W_{D} relativ ähnlich sind. Bei einer Straße 11 ist dieser Effekt noch ausgeprägter. Bei stehendem Bestand 9 ist die abgetastete Oberfläche dagegen relativ durchlässig, das heißt, manchmal werden weiter vorne oder höher liegende Pflanzenteile und manchmal weiter hinten oder tiefer liegende Pflanzenteile erfasst, sodass weniger Reflexionspunkte P_{A}, P_{B}, P_{C}, P_{D} in derselben Ebene liegen, wodurch auch die entsprechenden Abstandswerte W_{A}, W_{B}, Wc, W_{D} stärker variieren. Dabei spielt es kaum eine Rolle, ob die Erfassung des stehenden Bestands 9 von oben oder von der Seite erfolgt. Bei einem Hindernis 10 wie beispielsweise einem Strommasten oder Zaunpfahl ist die abgetastete Oberfläche ebenfalls relativ dicht und gleichmäßig, sodass auch hier relativ viele Reflexionspunkte P_{A}, P_{B}, P_{C}, P_{D} in derselben Ebene liegen, wodurch auch die entsprechenden Abstandswerte W_{A}, W_{B}, Wc, W_{D} relativ ähnlich sind.

Bei dem vorschlagsgemäßen Verfahren kann ferner vorgesehen sein, dass das laserbasierte Sensorsystem 6, insbesondere die Steuerungsanordnung 6a des laserbasierten Sensorsystems 6, aus dem Abstand zwischen den Auftrefflinien L_{A}, L_{B}, Lc, L_{D} aufeinanderfolgender Scan-Ebenen A, B, C, D auf die Ausrichtung eines gegenüber dem abgeernteten und/oder stehenden Bestand 8, 9 vertikal hervorstehenden Hindernisses 10 schließt. Mit der Ausrichtung ist die Orientierung im Raum (horizontal, vertikal, schräg) gemeint. Beispielsweise hat ein Hindernis 10 wie beispielsweise ein Strommast oder Zaunpfahl eine im wesentlichen vertikale Ausrichtung. So spreizen sich die Scan-Ebenen A, B, C, D, wenn sie seitlich auf ein vertikales Objekt treffen, wie zuvor erläutert weniger weit auf, als wenn sie von oben auf ein Objekt treffen.

Entsprechend ist es aus den zuvor erläuterten Gründen auch denkbar, dass das laserbasierte Sensorsystem 6, insbesondere die Steuerungsanordnung 6a des laserbasierten Sensorsystems 6, aus dem Abstand zwischen den Auftrefflinien L_{A}, L_{B}, Lc, L_{D} aufeinanderfolgender Scan-Ebenen A, B, C, D erkennt, ob ein Objekt von oben oder seitlich erfasst worden ist. Wie gesagt spreizen sich die Scan-Ebenen A, B, C, D, wenn sie seitlich auf ein vertikales Objekt treffen, weniger weit auf, als wenn sie von oben auf ein Objekt treffen.

Wie Fig. 3 zeigt, ist hier und vorzugsweise das laserbasierte Sensorsystem 6, insbesondere die Steuerungsanordnung 6a des laserbasierten Sensorsystems 6, außerdem in der Lage, aus den räumlichen Abstandswerten W_{A}, W_{B}, Wc, W_{D} aufeinanderfolgender Scan-Ebenen A, B, C, D, insbesondere aus den räumlichen Abstandswerten W_{A}, W_{B}, Wc, W_{D} aller Scan-Ebenen A, B, C, D, im Vorfeldbereich 7 Höhenwerte H, insbesondere für die Höhe eines abgeernteten Bestands 8, die Höhe H₁ eines stehenden Bestands 9 und/oder die Höhe H₂ eines gegenüber dem abgeernteten und/oder stehenden Bestand 8, 9 vertikal hervorstehenden Hindernisses 10, zu ermitteln. Gemäß Fig. 3 wird hier beispielhaft die Höhe H₁ des stehenden Bestands 9 und die Höhe H₂ eines Hindernisses 10 ermittelt, und zwar jeweils für mehrere Sektoren S.

Das laserbasierte Sensorsystem 6, insbesondere die Steuerungsanordnung 6a des laserbasierten Sensorsystems 6, kann nun zusätzlich zu den Abstandsänderungen zwischen den Auftrefflinien L_{A}, L_{B}, Lc, L_{D} aufeinanderfolgender Scan-Ebenen A, B, C, D außerdem den Grad der Streuung der räumlichen Abstandswerte W_{A}, W_{B}, Wc, W_{D}, insbesondere den Grad der Streuung der räumlichen Abstandswerte W_{A}, W_{B}, Wc, W_{D} um die jeweilige Auftrefflinie L_{A}, L_{B}, Lc, L_{D}, und/oder die Höhenwerte H, insbesondere für die Höhe eines abgeernteten Bestands 8, die Höhe H₁ eines stehenden Bestands 9 und/oder die Höhe H₂ eines gegenüber dem abgeernteten und/oder stehenden Bestand 8, 9 vertikal hervorstehenden Hindernisses 10, heranziehen, um auf die dreidimensionale Beschaffenheit des Vorfeldbereichs 7 zu schließen.

Wird schließlich, wie in den Figuren 1c), 2 und 3 dargestellt ist, ein gegenüber dem abgeernteten und/oder stehenden Bestand 8, 9 vertikal hervorstehendes Hindernis 10 durch das laserbasierte Sensorsystem 6, insbesondere durch die Steuerungsanordnung 6a des laserbasierten Sensorsystems 6, erkannt, wird hier und vorzugsweise die Erzeugung mindestens einer Steueraktion durch das Fahrerassistenzsystem 4 bewirkt. Die Steueraktion ist dabei beispielsweise ein Lenk- und/oder Bremsvorgang.

Nach einer weiteren Lehre, der eigenständige Bedeutung zukommt, wird die selbstfahrende landwirtschaftliche Arbeitsmaschine 1 zur Durchführung eines oben erläuterten, vorschlagsgemäßen Verfahrens als solche beansprucht. Auf alle diesbezüglichen Ausführungen darf verwiesen werden.

### Bezugszeichenliste

- 1: Arbeitsmaschine
- 2: Arbeitsorgane
- 3: Feld
- 4: Fahrerassistenzsystem
- 5: Sensoranordnung
- 6: laserbasiertes Sensorsystem
- 6a: Steuerungsanordnung
- 7: Vorfeldbereich
- 8: abgeernteter Bestand
- 9: stehender Bestand
- 10: Hindernis
- 11: Straße
- 12: Vorgewende

- A-D: Scan-Ebenen
- L_{A}-L_{D}: Auftrefflinien
- P_{A}-P_{D}: Reflexionspunkte
- W_{A}-W_{D}: Abstandswerte
- H, H₁, H₂: Höhenwerte
- RL: Referenzlinie
- RP: Referenzpunkt
- F: Fahrtrichtung
- S: Sektoren
- x, y, z: Koordinatenachsen

## Patentansprüche

1. Verfahren für den Betrieb einer selbstfahrenden landwirtschaftlichen Arbeitsmaschine (1), insbesondere Erntemaschine,
wobei die landwirtschaftliche Arbeitsmaschine (1) mindestens ein Arbeitsorgan (2) zur Durchführung oder Unterstützung landwirtschaftlicher Arbeit in einem Feld (3) und ein Fahrerassistenzsystem (4) zum Erzeugen von Steueraktionen innerhalb der Arbeitsmaschine (1) aufweist,
wobei das Fahrerassistenzsystem (4) eine Sensoranordnung (5) zur Erzeugung von Vorfeldinformationen aufweist und die Steueraktionen basierend auf den Vorfeldinformationen erzeugt,
wobei die Sensoranordnung (5) ein laserbasiertes Sensorsystem (6) aufweist, das zur Erzeugung von Abstandsinformationen zu einem vorbestimmten, relevanten Vorfeldbereich (7) der Arbeitsmaschine (1) den Vorfeldbereich (7) mit in mehreren Scan-Ebenen (A, B, C, D) verlaufenden elektromagnetischen Sendestrahlen abtastet,
**dadurch gekennzeichnet,**
**dass** das laserbasierte Sensorsystem (6) für die Scan-Ebenen (A, B, C, D) aus den Abstandsinformationen jeweils eine Auftrefflinie (L_{A}, L_{B}, Lc, L_{D}) errechnet und aus der Anordnung und/oder Formgebung der den Scan-Ebenen (A, B, C, D) zugeordneten Auftrefflinien (L_{A}, L_{B}, Lc, L_{D}) auf die dreidimensionale Beschaffenheit des Vorfeldbereichs (7) schließt.

2. Verfahren nach Anspruch 1, **dadurch gekennzeichnet, dass** die Sendestrahlen an Reflexionspunkten (P_{A}, P_{B}, P_{C}, P_{D}) des Vorfeldbereichs (7) reflektiert und wieder empfangen werden, wobei jedem Reflexionspunkt (P_{A}, P_{B}, P_{C}, P_{D}) ein einen räumlichen Abstandswert (W_{A}, W_{B}, Wc, W_{D}) repräsentierendes Reflexionssignal zugeordnet ist und dass das laserbasierte Sensorsystem (6) aufgrund einer Veränderung der Reflexionssignale aufeinanderfolgender Scan-Ebenen (A, B, C, D), die insbesondere eine Abstandsänderung zwischen den Auftrefflinien (L_{A}, L_{B}, Lc, L_{D}) aufeinanderfolgender Scan-Ebenen (A, B, C, D) repräsentiert, auf die dreidimensionale Beschaffenheit des Vorfeldbereichs (7) schließt.

3. Verfahren nach Anspruch 2, **dadurch gekennzeichnet, dass** die räumlichen Abstandswerte (W_{A}, W_{B}, Wc, W_{D}) für alle Scan-Ebenen (A, B, C, D) in einem Koordinatensystem, in dem die räumlichen Abstandswerte (W_{A}, W_{B}, Wc, Wo) je Scan-Ebene (A, B, C, D) über eine Richtung quer zur Fahrtrichtung (F) aufgetragen sind, entlang der jeweiligen Auftrefflinie (L_{A}, L_{B}, Lc, L_{D}) liegen.

4. Verfahren nach einem der vorhergehenden Ansprüche, **dadurch gekennzeichnet, dass** das laserbasierte Sensorsystem (6) bei der Abtastung des Vorfeldbereichs (7) je Scan-Ebene (A, B, C, D) eine Vielzahl von in Querrichtung der jeweiligen Scan-Ebene (A, B, C, D) nebeneinander liegenden Reflexionspunkten (P_{A}, P_{B}, P_{C}, P_{D}) erfasst und für jeden Reflexionspunkt (P_{A}, P_{B}, P_{C}, P_{D}) ein einen räumlichen Abstandswert (W_{A}, W_{B}, Wc, Wo) repräsentierendes Reflexionssignal erzeugt.

5. Verfahren nach einem der vorhergehenden Ansprüche, **dadurch gekennzeichnet, dass** eine Anzahl von mindestens drei oder genau drei Scan-Ebenen (A, B, C, D) vorgesehen ist, vorzugsweise, dass eine Anzahl von mindestens vier oder genau vier Scan-Ebenen (A, B, C, D) vorgesehen ist.

6. Verfahren nach einem der vorhergehenden Ansprüche, **dadurch gekennzeichnet, dass** das laserbasierte Sensorsystem (6) im Vorfeldbereich (7) abgeernteten Bestand (8), stehenden Bestand (9), ein gegenüber abgeerntetem und/oder stehendem Bestand (8, 9) vertikal hervorstehendes Hindernis (10), eine Straße (11) und/oder den Übergang vom Vorgewende (12) in stehenden Bestand (9) erkennt.

7. Verfahren nach einem der vorhergehenden Ansprüche, **dadurch gekennzeichnet, dass** der Abstand zwischen den Auftrefflinien (L_{A}, L_{B}, Lc, L_{D}) aufeinanderfolgender Scan-Ebenen (A, B, C, D)
- bei der Erfassung von abgeerntetem Bestand (8) von oben größer als bei der Erfassung von stehendem Bestand (9) von oben ist, und/oder,
- bei der Erfassung einer Straße (11) von oben größer als bei der Erfassung von stehendem Bestand (9) von oben ist, und/oder,
- bei der Erfassung von stehendem Bestand (9) von oben größer als bei der seitlichen Erfassung von einem gegenüber dem stehenden Bestand (9) vertikal hervorstehenden Hindernis (10) ist, und/oder,
- bei der Erfassung von abgeerntetem Bestand (8) von oben größer als bei der seitlichen Erfassung von einem gegenüber dem abgeernteten Bestand (8) vertikal hervorstehenden Hindernis (10) ist, und/oder,
- bei der Erfassung von abgeerntetem Bestand (8) von oben im Wesentlichen gleich groß wie bei der Erfassung einer Straße (11) von oben ist, und/oder,
- bei der Erfassung von stehendem Bestand (9) von oben größer als bei der seitlichen Erfassung von stehendem Bestand (9) ist, und/oder,
- bei der Erfassung von abgeerntetem Bestand (8) von oben größer als bei der seitlichen Erfassung von stehendem Bestand (9) ist.

8. Verfahren nach einem der vorhergehenden Ansprüche, **dadurch gekennzeichnet, dass** sich der Abstand zwischen den Auftrefflinien (L_{A}, L_{B}, Lc, L_{D}) aufeinanderfolgender Scan-Ebenen (A, B, C, D) mit abnehmender Entfernung der Arbeitsmaschine (1) von einem gegenüber abgeerntetem und/oder stehendem Bestand (8, 9) vertikal hervorstehenden Hindernis (10) bei der seitlichen Erfassung des Hindernisses (10) zunehmend verringert.

9. Verfahren nach einem der vorhergehenden Ansprüche, **dadurch gekennzeichnet, dass** der Grad der Streuung der räumlichen Abstandswerte (W_{A}, W_{B}, Wc, W_{D}), insbesondere der Grad der Streuung der räumlichen Abstandswerte (W_{A}, W_{B}, Wc, W_{D}) um die jeweilige Auftrefflinie (L_{A}, L_{B}, Lc, L_{D}),
- bei der Erfassung von abgeerntetem Bestand (8) von oben kleiner als bei der Erfassung von stehendem Bestand (9) von oben ist, und/oder,
- bei der Erfassung einer Straße (11) von oben kleiner als bei der Erfassung von stehendem Bestand (9) von oben ist, und/oder,
- bei der Erfassung von stehendem Bestand (9) von oben größer als bei der seitlichen Erfassung von einem gegenüber dem stehenden Bestand (9) vertikal hervorstehenden Hindernis (10) ist, und/oder,
- bei der Erfassung von abgeerntetem Bestand (8) von oben größer als bei der seitlichen Erfassung von einem gegenüber dem abgeernteten Bestand (8) vertikal hervorstehenden Hindernis (10) ist, und/oder,
- bei der Erfassung von abgeerntetem Bestand (8) von oben größer als bei der Erfassung einer Straße (11) von oben ist, und/oder,
- bei der Erfassung von stehendem Bestand (9) von oben im Wesentlichen gleich groß wie bei der seitlichen Erfassung von stehendem Bestand (9) ist, und/oder,
- bei der Erfassung von abgeerntetem Bestand (8) von oben kleiner als bei der seitlichen Erfassung von stehendem Bestand (9) ist.

10. Verfahren nach einem der vorhergehenden Ansprüche, **dadurch gekennzeichnet, dass** das laserbasierte Sensorsystem (6) aus dem Abstand zwischen den Auftrefflinien (L_{A}, L_{B}, Lc, L_{D}) aufeinanderfolgender Scan-Ebenen (A, B, C, D) auf die Ausrichtung eines gegenüber dem abgeernteten und/oder stehenden Bestand (8, 9) vertikal hervorstehenden Hindernisses (10) schließt.

11. Verfahren nach einem der vorhergehenden Ansprüche, **dadurch gekennzeichnet, dass** das laserbasierte Sensorsystem (6) aus dem Abstand zwischen den Auftrefflinien (L_{A}, L_{B}, Lc, L_{D}) aufeinanderfolgender Scan-Ebenen (A, B, C, D) erkennt, ob ein Objekt von oben oder seitlich erfasst worden ist.

12. Verfahren nach einem der vorhergehenden Ansprüche, **dadurch gekennzeichnet, dass** das laserbasierte Sensorsystem (6) aus den räumlichen Abstandswerten (W_{A}, W_{B}, Wc, W_{D}) aufeinanderfolgender Scan-Ebenen (A, B, C, D), insbesondere aus den räumlichen Abstandswerten (W_{A}, W_{B}, W_{C}, W_{D}) aller Scan-Ebenen (A, B, C, D), im Vorfeldbereich (7) Höhenwerte (H), insbesondere für die Höhe eines abgeernteten Bestands (8), die Höhe (H₁) eines stehenden Bestands (9) und/oder die Höhe (H₂) eines gegenüber dem abgeernteten und/oder stehenden Bestand (8, 9) vertikal hervorstehenden Hindernisses (10), ermittelt.

13. Verfahren nach einem der vorhergehenden Ansprüche, **dadurch gekennzeichnet, dass** das laserbasierte Sensorsystem (6) zusätzlich zu den Abstandsänderungen zwischen den Auftrefflinien (L_{A}, L_{B}, Lc, L_{D}) aufeinanderfolgender Scan-Ebenen (A, B, C, D) den Grad der Streuung der räumlichen Abstandswerte (W_{A}, W_{B}, Wc, W_{D}), insbesondere den Grad der Streuung der räumlichen Abstandswerte (W_{A}, W_{B}, Wc, W_{D}) um die jeweilige Auftrefflinie (L_{A}, L_{B}, Lc, L_{D}), und/oder Höhenwerte (H), insbesondere für die Höhe eines abgeernteten Bestands (8), die Höhe (H₁) eines stehenden Bestands (9) und/oder die Höhe (H₂) eines gegenüber dem abgeernteten und/oder stehenden Bestand (8, 9) vertikal hervorstehenden Hindernisses (10), heranzieht, um auf die dreidimensionale Beschaffenheit des Vorfeldbereichs (7) zu schließen.

14. Verfahren nach einem der vorhergehenden Ansprüche, **dadurch gekennzeichnet, dass** ein durch das laserbasierte Sensorsystem (6) erkanntes, gegenüber dem abgeernteten und/oder stehenden Bestand (8, 9) vertikal hervorstehendes Hindernis (10) die Erzeugung mindestens einer Steueraktion durch das Fahrerassistenzsystem (4) bewirkt, vorzugsweise, dass die Steueraktion ein Lenk- und/oder Bremsvorgang ist.

15. Selbstfahrende landwirtschaftliche Arbeitsmaschine (1), insbesondere Erntemaschine, **dadurch gekennzeichnet, dass** die Arbeitsmaschine mit Mitteln zur Durchführung eines Verfahrens nach einem der vorhergehenden Ansprüche ausgestattet ist.

## Claims

1. Method for operating a self-propelled agricultural machine (1), in particular a harvester,
wherein the agricultural working machine (1) has at least one working member (2) for carrying out or supporting agricultural work in a field (3) and a driver assistance system (4) for generating control actions within the working machine (1), wherein the driver assistance system (4) has a sensor arrangement (5) for generating apron information and generates the control actions based on the apron information,
wherein the sensor arrangement (5) has a laser-based sensor system (6), which scans the apron area (7) with electromagnetic transmission beams running in several scan planes (A, B, C, D) in order to generate distance information to a predetermined, relevant apron area (7) of the working machine (1),
**characterised in that**
the laser-based sensor system (6) calculates a respective line of impact (L_{A}, L_{B}, L_{C}, L_{D}) for the scan planes (A, B, C, D) and infers the three-dimensional nature of the apron area (7) from the arrangement and/or shape of the impact lines (L_{A}, L_{B}, L_{C}, L_{D}) assigned to the scan planes (A, B, C, D).

2. Method according to claim 1, **characterised in that** the transmitted beams are reflected at reflection points (P_{A}, P_{B}, P_{C}, P_{D}) of the apron area (7) and received again, wherein a reflection signal representing a spatial distance value (W_{A}, W_{B}, W_{C}, W_{D}) is assigned to each reflection point (P_{A}, P_{B}, P_{C}, P_{D}), and **in that** the laser-based sensor system (6) is **characterised by** a change in the reflection signals of successive scan planes (A, B, C, D), which in particular represents a change in distance between the incident lines (L_{A}, L_{B}, L_{C}, L_{D}) of successive scan planes (A, B, C, D), infers the three-dimensional nature of the apron area (7).

3. Method according to claim 2, **characterised in that** the spatial distance values (W_{A}, W_{B}, W_{C}, W_{D}) for all scan planes (A, B, C, D) are determined in a coordinate system, in which the spatial distance values (W_{A}, W_{B}, W_{C}, W_{D}) for each scan plane (A, B, C, D) are plotted over a direction transverse to the direction of travel (F), along the respective line of impact (L_{A}, L_{B}, L_{C}, L_{D}).

4. Method according to one of the preceding claims, **characterised in that** the laser-based sensor system (6), when scanning the apron area (7), detects a plurality of reflection points (P_{A}, P_{B}, P_{C}, P_{D}) lying next to one another in the transverse direction of the respective scan plane (A, B, C, D) for each scan plane (A, B, C, D) and generates a reflection signal representing a spatial distance value (W_{A}, W_{B}, W_{C}, W_{D}) for each reflection point (P_{A}, P_{B}, P_{C}, P_{D}).

5. Method according to one of the preceding claims, **characterised in that** a number of at least three or exactly three scan planes (A, B, C, D) is provided, preferably that a number of at least four or exactly four scan planes (A, B, C, D) is provided.

6. Method according to one of the preceding claims, **characterised in that** the laser-based sensor system (6) in the headland area (7) detects harvested crop (8), standing crop (9), a s obstacle (10) projecting vertically from the harvested and/or standing crop (8, 9), a road (11) and/or the transition from the headland (12) to standing crop (9).

7. Method according to one of the preceding claims, **characterised in that** the distance between the impact lines (L_{A}, L_{B}, L_{C}, L_{D}) of successive scan planes (A, B, C, D)
- at the detection of harvested stock (8) from above is greater than when detecting standing stock (9) from above, and/or,
- when detecting a road (11) from above is greater than when detecting standing stock (9) from above, and/or,
- for the detection of standing stock (9) from above is greater than for the lateral detection of an obstacle (10) projecting vertically from the standing stock (9), and/or,
- is greater when detecting harvested crop (8) from above than when laterally detecting an obstacle (10) projecting vertically from the harvested crop (8), and/or,
- when detecting harvested crop (8) from above is essentially the same size as when detecting a road (11) from above, and/or,
- is greater for the detection of standing stock (9) from above than for the lateral detection of standing stock (9), and/or,
- is greater when detecting harvested stock (8) from above than when detecting standing stock (9) from the side.

8. Method according to one of the preceding claims, **characterised in that** the distance between the impact lines (L_{A}, L_{B}, L_{C}, L_{D}) of successive scan planes (A, B, C, D) decreases progressively with decreasing distance of the working machine (1) from an obstacle (10) projecting vertically with respect to harvested and/or standing crop (8, 9) during the lateral detection of the obstacle (10).

9. Method according to one of the preceding claims, **characterised in that** is the degree of scattering of the spatial distance values (W_{A}, W_{B}, W_{C}, W_{D}), in particular the degree of scattering of the spatial distance values (W_{A}, W_{B}, W_{C}, W_{D}) around the respective line of impact (L_{A}, L_{B}, L_{C}, L_{D}),
- is smaller for the detection of harvested crop (8) from above than for the detection of standing crop (9) from above, and/or,
- is smaller when a road (11) is detected from above than when standing stock (9) is detected from above, and/or,
- is greater for the detection of standing stock (9) from above than for the lateral detection of an obstacle (10) projecting vertically from the standing stock (9), and/or,
- is greater when the harvested crop (8) is detected from above than when it is detected laterally from an obstacle (10) projecting vertically from the harvested crop (8), and/or,
- is greater for the detection of harvested crop (8) from above than for the detection of a road (11) from above, and/or,
- when detecting standing stock (9) from above is essentially the same size as when detecting standing stock (9) from the side, and/or,
- is smaller for the detection of harvested crop (8) from above than for the lateral detection of standing crop (9).

10. Method according to one of the preceding claims, **characterised in that** the laser-based sensor system (6) uses the distance between the impact lines (L_{A}, L_{B}, L_{C}, L_{D}) of successive scan planes (A, B, C, D) to infer the orientation of an obstacle (10) projecting vertically from the harvested and/or standing crop (8, 9).

11. Method according to one of the preceding claims, **characterised in that** the laser-based sensor system (6) detects from the distance between the impact lines (L_{A}, L_{B}, L_{C}, L_{D}) of successive scan planes (A, B, C, D) whether an object has been detected from above or from the side.

12. Method according to one of the preceding claims, **characterised in that** that the laser-based sensor system (6) calculates from the spatial distance values (W_{A}, W_{B}, W_{C}, W_{D}) of successive scan planes (A, B, C, D), in particular from the spatial distance values (W_{A}, W_{B}, W_{C}, W_{D}) of all scan planes (A, B, C, D), in the apron area (7) height values (H), in particular for the height of a harvested crop (8), the height (H₁) of a standing crop (9) and/or the height (H₂) of an obstacle (10) projecting vertically in relation to the harvested and/or standing crop (8, 9).

13. Method according to one of the preceding claims, **characterised in that** the laser-based sensor system (6), in addition to the changes in distance between the lines of impact (L_{A}, L_{B}, L_{C}, L_{D}) of successive scan planes (A, B, C, D), the laser-based sensor system (6) determines the degree of scattering of the spatial distance values (W_{A}, W_{B}, W_{C}, W_{D}), in particular the degree of scattering of the spatial distance values (W_{A}, W_{B}, W_{C}, W_{D}) around the respective impact line (L_{A}, L_{B}, L_{C}, L_{D}), and/or height values (H), in particular for the height of a harvested crop (8), the height (H₁) of a standing crop (9) and/or the height (H₂) of an obstacle (10) projecting vertically in relation to the harvested and/or standing crop (8, 9), in order to draw conclusions about the three-dimensional nature of the apron area (7).

14. Method according to one of the preceding claims, **characterised in that** an obstacle (10) detected by the laser-based sensor system (6) and projecting vertically with respect to the harvested and/or standing crop (8, 9) causes at least one control action to be generated by the driver assistance system (4), preferably in that the control action is a steering and/or braking operation.

15. Self-propelled agricultural working machine (1), in particular harvesting machine, **characterised in that** the working machine is equipped with means for carrying out a method according to one of the preceding claims.

## Revendications

1. Procédé de fonctionnement d'une machine de travail agricole automotrice (1), en particulier machine de récolte,
la machine de travail agricole (1) comportant au moins un organe de travail (2) pour réaliser ou assister du travail agricole dans un champ (3) et un système d'assistance au conducteur (4) pour générer des actions de commande à l'intérieur de la machine de travail (1),
le système d'assistance au conducteur (4) comportant un agencement de capteur (5) pour générer des informations de champ devant et générant les actions de commande sur la base des informations de champ devant,
l'agencement de capteur (5) comportant un système de capteur à laser (6) qui, pour générer des informations de distance sur une zone de champ devant prédéterminée pertinente (7) de la machine de travail (1), palpe la zone de champ devant (7) avec des faisceaux d'émission électromagnétiques s'étendant dans plusieurs plans de scannage (A, B, C, D),
**caractérisé en ce que**
le système de capteur à laser (6) pour les plans de scannage (A, B, C, D) calcule respectivement une ligne d'impact (L_{A}, L_{B}, L_{C}, L_{D}) à partir des informations de distance et, à partir de l'agencement et/ou de la conformation des lignes d'impact (L_{A}, L_{B}, L_{C}, L_{D}) associées aux plans de scannage (A, B, C, D), déduit la configuration tridimensionnelle de la zone de champ devant (7).

2. Procédé selon la revendication 1, **caractérisé en ce que** les faisceaux d'émission sont réfléchis au niveau de points de réflexion (P_{A}, P_{B}, P_{C}, P_{D}) de la zone de champ devant (7) et à nouveau reçus, à chaque point de réflexion (P_{A}, P_{B}, P_{C}, P_{D}) étant associé un signal de réflexion représentant une valeur de distance spatiale (W_{A}, W_{B}, W_{C}, W_{D}), et **en ce que** le système de capteur à laser (6) déduit la configuration tridimensionnelle de la zone de champ devant (7) sur la base d'une modification des signaux de réflexion de plans de scannage successifs (A, B, C, D), laquelle représente en particulier une variation de distance entre les lignes d'impact (L_{A}, L_{B}, L_{C}, L_{D}) de plans de scannage successifs (A, B, C, D).

3. Procédé selon la revendication 2, **caractérisé en ce que** les valeurs de distance spatiale (W_{A}, W_{B}, W_{C}, W_{D}) pour tous les plans de scannage (A, B, C, D) se trouvent le long de la ligne d'impact respective (L_{A}, L_{B}, L_{C}, L_{D}) dans un système de coordonnées dans lequel les valeurs de distance spatiale (W_{A}, W_{B}, W_{C}, W_{D}) sont rapportées, par plan de scannage (A, B, C, D), à une direction transversale à la direction de roulement (F) .

4. Procédé selon une des revendications précédentes, **caractérisé en ce que** le système de capteur à laser (6) détecte, lors de la palpation de la zone de champ devant (7), par plan de scannage (A, B, C, D), une pluralité de points de réflexion (P_{A}, P_{B}, P_{C}, P_{D}) situés les uns à côté des autres dans la direction transversale du plan de scannage respectif (A, B, C, D) et génère pour chaque point de réflexion (P_{A}, P_{B}, P_{C}, P_{D}) un signal de réflexion représentant une valeur de distance spatiale (W_{A}, W_{B}, W_{C}, W_{D}).

5. Procédé selon une des revendications précédentes, **caractérisé en ce qu'**un nombre d'au moins trois ou d'exactement trois plans de scannage (A, B, C, D) est prévu, préférentiellement **en ce qu'**un nombre d'au moins quatre ou d'exactement quatre plans de scannage (A, B, C, D) est prévu.

6. Procédé selon une des revendications précédentes, **caractérisé en ce que** le système de capteur à laser (6) détecte, dans la zone de champ devant (7), de la culture (8) récoltée, de la culture sur pied (9), un obstacle (10) en saillie verticale par rapport à une culture (8, 9) récoltée et/ou sur pied, une route (11) et/ou la transition d'une tournière (12) à une culture sur pied (9).

7. Procédé selon une des revendications précédentes, **caractérisé en ce que** la distance entre les lignes d'impact (L_{A}, L_{B}, L_{C}, L_{D}) de plans de scannage successifs (A, B, C, D)
- est plus grande lors de la détection de culture récoltée (8) par le haut que lors de la détection de culture sur pied (9) par le haut, et/ou
- est plus grande lors de la détection d'une route (11) par le haut que lors de la détection de culture sur pied (9) par le haut, et/ou
- est plus grande lors de la détection de culture sur pied (9) par le haut que lors de la détection latérale d'un obstacle (10) en saillie verticale par rapport à la culture sur pied (9), et/ou
- est plus grande lors de la détection de culture récoltée (8) par le haut que lors de la détection latérale d'un obstacle (10) en saillie verticale par rapport à la culture récoltée (8), et/ou
- est sensiblement égale lors de la détection de culture récoltée (8) par le haut et lors de la détection d'une route (11) par le haut, et/ou
- est plus grande lors de la détection de culture sur pied (9) par le haut que lors de la détection latérale de culture sur pied (9), et/ou
- est plus grande lors de la détection de culture récoltée (8) par le haut que lors de la détection latérale de culture sur pied (9).

8. Procédé selon une des revendications précédentes, **caractérisé en ce que** la distance entre les lignes d'impact (L_{A}, L_{B}, L_{C}, L_{D}) de plans de scannage successifs (A, B, C, D) se réduit de plus en plus à mesure que diminue l'éloignement entre la machine de travail (1) et un obstacle (10) en saillie verticale par rapport à une culture récoltée et/ou sur pied (8, 9) lors de la détection latérale de l'obstacle (10).

9. Procédé selon une des revendications précédentes, **caractérisé en ce que** le degré de dispersion des valeurs de distance spatiale (W_{A}, W_{B}, W_{C}, W_{D}), en particulier le degré de dispersion des valeurs de distance spatiale (W_{A}, W_{B}, W_{C}, W_{D}) autour de la ligne d'impact respective (L_{A}, L_{B}, L_{C}, L_{D})
- est plus petit lors de la détection de culture récoltée (8) par le haut que lors de la détection de culture sur pied (9) par le haut, et/ou
- est plus petit lors de la détection d'une route (11) par le haut que lors de la détection de culture sur pied (9) par le haut, et/ou
- est plus grand lors de la détection de culture sur pied (9) par le haut que lors de la détection latérale d'un obstacle (10) en saillie verticale par rapport à la culture sur pied (9), et/ou
- est plus grand lors de la détection de culture récoltée (8) par le haut que lors de la détection latérale d'un obstacle (10) en saillie verticale par rapport à la culture récoltée (8), et/ou
- est plus grand lors de la détection de culture récoltée (8) par le haut que lors de la détection d'une route (11) par le haut, et/ou
- est sensiblement égal lors de la détection de culture sur pied (9) par le haut et lors de la détection latérale de culture sur pied (9), et/ou
- est plus petit lors de la détection de culture récoltée (8) par le haut que lors de la détection latérale de culture sur pied (9).

10. Procédé selon une des revendications précédentes, **caractérisé en ce que** le système de capteur à laser (6) déduit de la distance entre les lignes d'impact (L_{A}, L_{B}, L_{C}, L_{D}) de plans de scannage successifs (A, B, C, D) l'orientation d'un obstacle (10) en saillie verticale par rapport à la culture récoltée et/ou sur pied (8, 9).

11. Procédé selon une des revendications précédentes, **caractérisé en ce que** le système de capteur à laser (6) reconnaît à partir de la distance entre les lignes d'impact (L_{A}, L_{B}, L_{C}, L_{D}) de plans de scannage successifs (A, B, C, D) si un objet a été détecté par le haut ou latéralement.

12. Procédé selon une des revendications précédentes, **caractérisé en ce que** le système de capteur à laser (6) détermine à partir des valeurs de distance spatiale (W_{A}, W_{B}, W_{C}, W_{D}) de plans de scannage successifs (A, B, C, D), en particulier à partir des valeurs de distance spatiale (W_{A}, W_{B}, W_{C}, W_{D}) de tous les plans de scannage (A, B, C, D), des valeurs de hauteur (H) dans la zone de champ devant (7), en particulier pour la hauteur de la culture récoltée (8), la hauteur (H₁) d'une culture sur pied (9) et/ou la hauteur (H₂) d'un obstacle (10) en saillie verticale par rapport à la culture récoltée et/ou sur pied (8, 9).

13. Procédé selon une des revendications précédentes, **caractérisé en ce que** le système de capteur à laser (6), en plus des variations de distance entre les lignes d'impact (L_{A}, L_{B}, L_{C}, L_{D}) de plans de scannage successifs (A, B, C, D), utilise le degré de dispersion des valeurs de distance spatiale (W_{A}, W_{B}, W_{C}, W_{D}), en particulier le degré de dispersion des valeurs de distance spatiale (W_{A}, W_{B}, W_{C}, W_{D}) autour de la ligne d'impact respective (L_{A}, L_{B}, L_{C}, L_{D}), et/ou des valeurs de hauteur (H), en particulier pour la hauteur d'une culture récoltée (8), la hauteur (H₁) d'une culture sur pied (9) et/ou la hauteur (H₂) d'un obstacle (10) en saillie verticale par rapport à la culture récoltée et/ou sur pied (8, 9), pour déduire la configuration tridimensionnelle de la zone de champ devant (7).

14. Procédé selon une des revendications précédentes, **caractérisé en ce qu'**un obstacle (10) reconnu par le système de capteur à laser (6), en saillie verticale par rapport à la culture récoltée et/ou sur pied (8, 9), provoque la génération d'au moins une action de commande par le système d'assistance au conducteur (4), préférentiellement **en ce que** l'action de commande est une opération de braquage et/ou de freinage.

15. Machine de travail agricole automotrice (1), en particulier machine de récolte, **caractérisée en ce que** la machine de travail est équipée de moyens pour réaliser un procédé selon une des revendications précédentes.
